(19) Europäisches Patentamt
European Patent Office
Office européen des brevets

(11) **EP 4 568 368 A1**

(12) **EUROPEAN PATENT APPLICATION**
published in accordance with Art. 153(4) EPC

(43) Date of publication:
**11.06.2025 Bulletin 2025/24**

(21) Application number: **23850336.1**

(22) Date of filing: **27.07.2023**

(51) International Patent Classification (IPC):
*H04W 52/52* (2009.01)   *H04W 52/14* (2009.01)
*H04W 52/24* (2009.01)   *H04W 52/10* (2009.01)
*H04W 52/36* (2009.01)   *H04W 72/20* (2023.01)
*H04W 84/06* (2009.01)   *H04B 7/155* (2006.01)

(52) Cooperative Patent Classification (CPC):
**H04B 7/155; H04W 52/10; H04W 52/14;
H04W 52/24; H04W 52/36; H04W 52/52;
H04W 72/20; H04W 84/06**

(86) International application number:
**PCT/KR2023/010893**

(87) International publication number:
**WO 2024/029832 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.08.2022 KR 20220096375**

(71) Applicant: **LG Electronics Inc.**
**Yeongdeungpo-gu**
**Seoul 07336 (KR)**

(72) Inventors:
• **SHIM, Jaenam**
  **Seoul 06772 (KR)**
• **YOU, Hyangsun**
  **Seoul 06772 (KR)**
• **KO, Hyunsoo**
  **Seoul 06772 (KR)**

(74) Representative: **Plasseraud IP**
**104 Rue de Richelieu**
**CS92104**
**75080 Paris Cedex 02 (FR)**

(54) **METHOD BY WHICH DEVICE PERFORMS COMMUNICATION IN WIRELESS COMMUNICATION SYSTEM AND DEVICE THEREFOR**

(57)    Disclosed are a method by which a device performs communication in a wireless communication system, and a device therefor, according to various embodiments. The method by which a device performs communication in a wireless communication system comprises the steps of: setting up a control link for receiving control information from a base station and a forwarding link for forwarding a signal received from a terminal; determining a power amplification gain for the forwarding link; and forwarding the signal received from the terminal to the base station through the forwarding link on the basis of the power amplification gain, wherein the power amplification gain is determined on the basis of power control information established for the control link.

FIG. 10

(a)          (b)

**Description**

**TECHNICAL FIELD**

The present disclosure relates to a method for a device to perform communication in a wireless communication system and a device therefor.

BACKGROUND ART

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

**DISCLOSURE**

**Technical Problem**

Objects to be achieved are to provide a method and device for efficiently determining a power amplifying gain for a forwarding link based on power control information regarding a control link.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

**Technical Solution**

According to an aspect of the present disclosure, provided herein is a method of performing communication by a device in a wireless communication system, including configuring a control link for receiving control information from a base station (BS) and a forwarding link for forwarding a signal received from a user equipment (UE); determining a power amplifying gain for the forwarding link; and forwarding the signal received from the UE to the BS through the forwarding link based on the power amplifying gain. The power amplifying gain may be determined based on power control information configured for the control link.

Alternatively, the power amplifying gain may be determined based on one of a plurality of power parameters included in the power control information.

Alternatively, the one power parameter may be preconfigured as a power parameter related to path loss among the plurality of power parameters.

Alternatively, the power amplifying gain may be determined based on a resource index of a downlink reference signal included in the power control information.

Alternatively, the power amplifying gain may be determined based on the power control information related to a sounding reference signal (SRS) for the control link.

Alternatively, the power amplifying gain may be determined based on the power control information related to a physical random access channel (PRACH) for the control link.

Alternatively, the power amplifying gain may be determined by applying at least one of a predetermined weight or an offset to a first transmission power of an uplink signal for the control link, calculated based on the power control information.

Alternatively, the predetermined weight and the offset may be indicated by the BS through radio resource control (RRC) signaling or downlink control information (DCI).

Alternatively, the method may further include reporting information about the power amplifying gain compared to a maximum power amplifying gain to the BS.

Alternatively, the device may be a network-controlled repeater (NCR).

In another aspect of the present disclosure, provided herein is a device for performing communication in a wireless communication system, including a memory configured to store instructions; and a processor configured to perform operations by executing the instructions. The operations of the processor include configuring a control link for receiving control information from a base station (BS) and a forwarding link for forwarding a signal received from a user equipment (UE), determining a power amplifying gain for the forwarding link, and forwarding the signal received from the UE to the BS through the forwarding link based on the power amplifying gain. The power amplifying gain may be determined based on power control information configured for the control link.

In another aspect of the present disclosure, provided herein is a chipset for performing communication in a wireless communication system, including at least one processor, and at least one memory operatively connected to the at least one processor and configured to cause, when executed, the at least one processor to perform operations. The operations include configuring a control link for receiving control information from a base station (BS) and a forwarding link for forwarding a signal received from a user equipment (UE), determining a power amplifying gain for the forwarding link, and forwarding the signal received from the UE to the BS through the forwarding link based on the power amplifying gain. The power amplifying gain may be determined based on power control information configured for the control link.

Advantageous Effects

Various embodiments are capable of efficiently determining a power amplifying gain for a forwarding link based on power control information regarding a control link.

Alternatively, various embodiments do not require separate signaling for controlling power amplifying gain for the forwarding link by determining the power amplifying gain for the forwarding link based on the power control information regarding the control link, thereby minimizing signaling load of control information regarding the forwarding link.

Effects to be achieved by embodiment(s) are not limited to what has been particularly described hereinabove and other effects not mentioned herein will be more clearly understood by persons skilled in the art to which embodiment(s) pertain from the following detailed description.

Brief Description of Drawings

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 illustrates an example of mapping physical channels in a slot.
FIG. 6 illustrates an exemplary PDCCH transmission/reception process.
FIG. 7 shows an example of a procedure for controlling uplink transmit power.
FIG. 8 schematically illustrates an example of a parent link and a child link.
FIG. 9 is a diagram illustrating an example of topology in which a network-controlled repeater (NCR) performs transmission and reception between the gNB and the UE.
FIG. 10 is a diagram illustrating a radio frequency (RF) repeater and an NCR.
FIG. 11 is a flowchart illustrating a method for a device to determine a power amplifying gain for a forwarding link.
FIG. 12 illustrates a communication system applied to the present disclosure.
FIG. 13 illustrates wireless devices applicable to the present disclosure.
FIG. 14 illustrates another example of a wireless device to which the present disclosure is applied.

**BEST MODE**

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

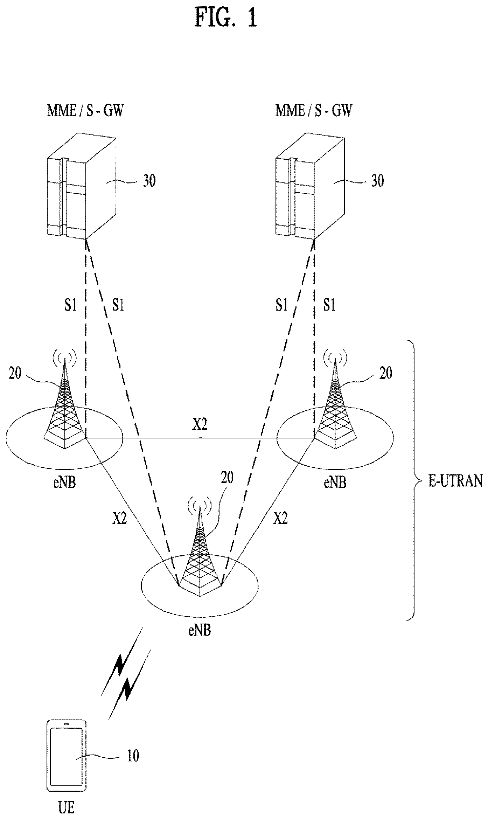

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user UE (UT), subscriber station (SS), mobile UE (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

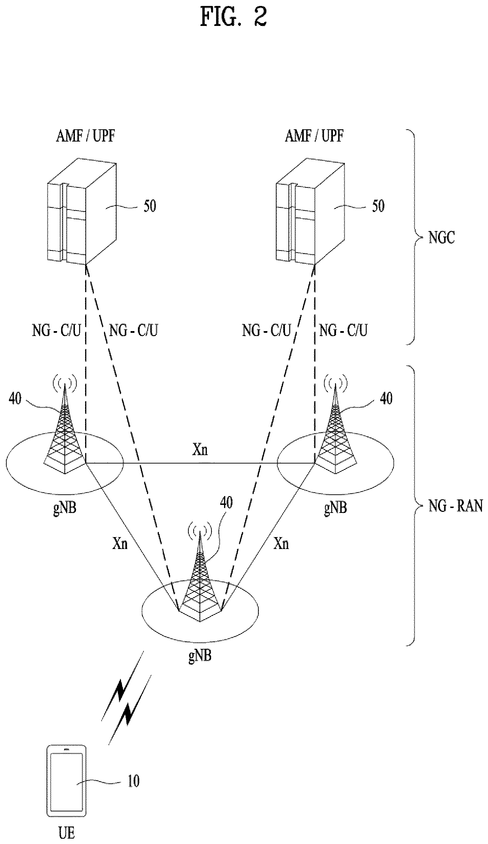

FIG. 2 illustrates the structure of a NR system to which the present disclosure is applicable.

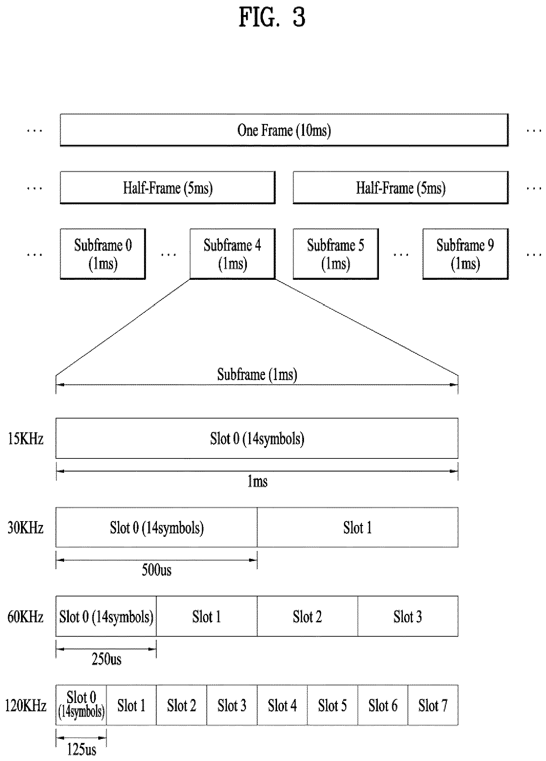

Referring to FIG. 2, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |

(continued)

| Frequency Range designation | Corresponding frequency range | Subcarrier Spacing (SCS) |
|---|---|---|
| FR2 | 24250MHz - 52600MHz | 60, 120, 240kHz |

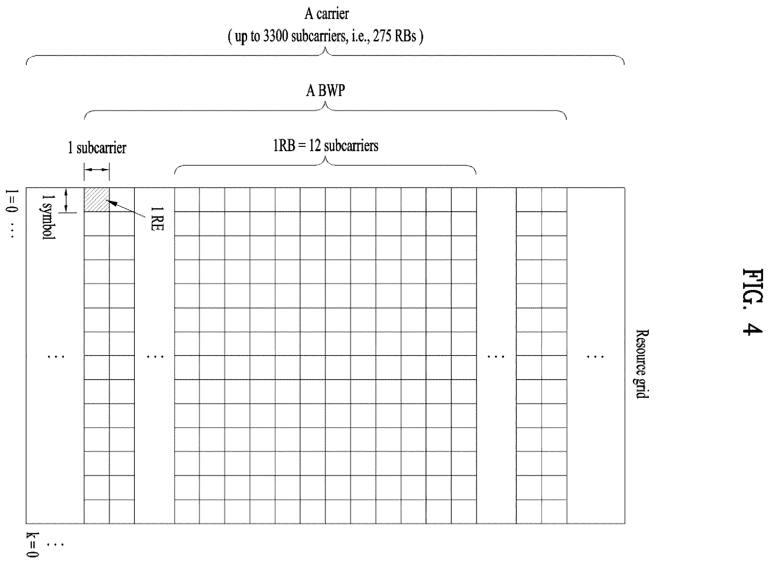

FIG. 4 illustrates the slot structure of a NR frame to which the present disclosure is applicable.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

## Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signalling, etc.). The BS may instruct the UE to switch to another configured DL/UL BWP (through L1 signaling, MAC CE or RRC signalling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

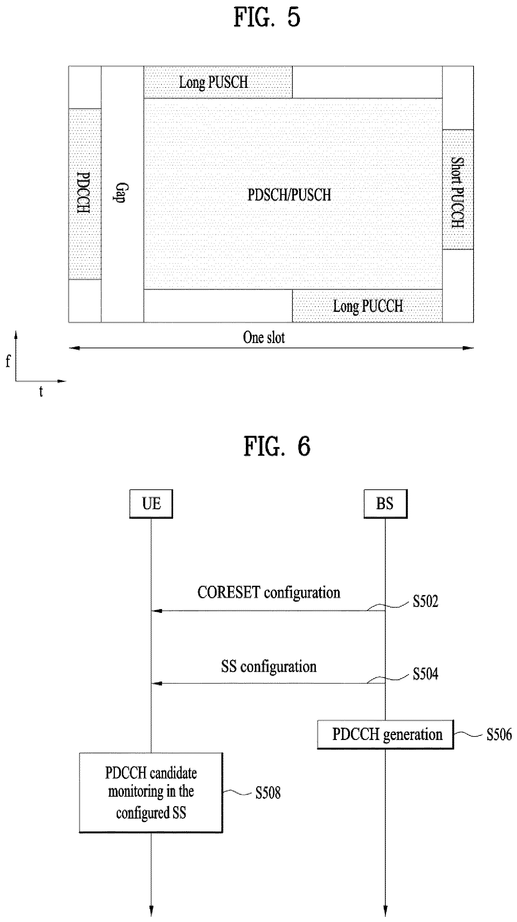

FIG. 5 illustrates an example of mapping physical channels in a slot.

A slot may include a DL control channel, DL or UL data, a UL control channel, etc., all of which are included. For example, the first N symbols in a slot may be used to transmit a DL control channel (hereinafter, referred to as a DL control region), and the last M symbols in the slot may be used to transmit a UL control channel (hereinafter, referred to as a UL control region). N and M are each integers greater than or equal to 0. A resource region (hereinafter, referred to as a data region) between the DL control region and the UL control region may be used for DL data transmission or UL data transmission. A time gap for DL-to-UL or UL-to-DL switching may exist between the control region and the data region. A PDCCH may be transmitted in the DL control region, and a PDSCH may be transmitted in the DL data region. Some symbols at the time of switching from DL to UL in a slot may be used as a time gap.

In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 6 illustrates an exemplary PDCCH transmission/reception process.

Referring to FIG. 6, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. System information (SIB1) broadcast in a cell includes cell-specific PDSCH configuration information, PDSCH-ConfigCommon. PDSCH-Config-Common includes a list (or look-up table) of parameters related to a time-domain resource allocation, pdsch-Time-DomainAllocationList. Each pdsch-TimeDomainAllocationList may include up to 16 entries (or rows) each being joint-encoded {K0, PDSCH mapping type, PDSCH start symbol and length (SLIV)}. Aside from (additionally to) pdsch-TimeDomainAllocationList configured through PDSCH-ConfigCommon, pdsch-TimeDomainAllocationList may be provided through a UE-specific PDSCH configuration, PDSCH-Config. pdsch-TimeDomainAllocationList configured UE-specifically has the same structure as pdsch-TimeDomainAllocationList provided UE-commonly. For K0 and an SLIV of pdsch-TimeDomainAllocationList, the following description is referred to.

Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicity AndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 5 shows the characteristics of each SS.

[Table 5]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 6 shows DCI formats transmitted on the PDCCH.

[Table 6]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |

(continued)

| DCI format | Usage |
|---|---|
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

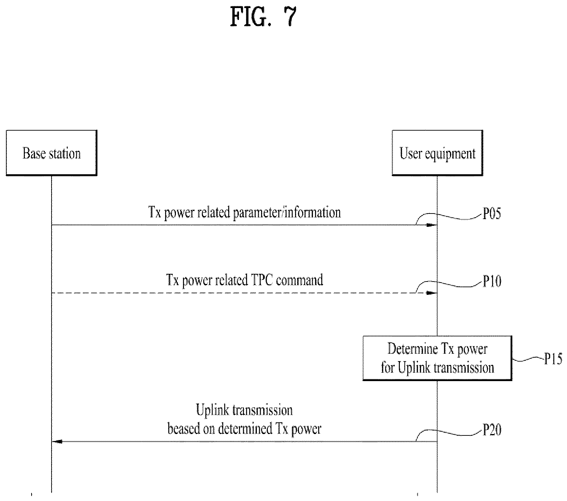

FIG. 7 shows an example of a procedure for controlling uplink transmit power.

First, a user equipment (UE) may receive a parameter and/or information related to transmit power (Tx power) from a base station (BS) (P05). In this case, the UE may receive the corresponding parameter and/or information through higher layer signaling (e.g., RRC signaling or MAC-CE), etc. For example, in relation to PUSCH transmission, PUCCH transmission, SRS transmission, and/or PRACH transmission, the UE may receive the parameter and/or information related to Tx power control.

Then, the UE may receive a TPC command (TPC command) related to Tx power from the BS (P10). In this case, the UE may receive the corresponding TPC command through lower layer signaling (e.g., DCI), etc. For example, in relation to PUSCH transmission, PUCCH transmission, and/or SRS transmission, the UE may receive information about a TPC command to be used for determination of a power control adjustment state, etc. through a TPC command field of a predefined DCI format. However, in the case of PRACH transmission, the corresponding step may be omitted.

Then, the UE may determine (or calculate) Tx power for uplink transmission based on the parameter, information, and/or TPC command received from the BS (P15). For example, the UE may determine PUSCH Tx power (or PUCCH Tx power, SRS Tx power, and/or PRACH Tx power) based on Equation 1 below. And/or, when two or more uplink channels and/or signals need to be transmitted overlappingly, such as in a situation such as carrier aggregation, the UE may also determine Tx power for uplink transmission in consideration of priority order (priority) and the like.

Then, the UE may transmit one or more uplink channels and/or signals (e.g., PUSCH, PUCCH, SRS, or PRACH) to the BS based on the determined (or calculated) Tx power (P20).

Hereinafter, content related to power control will be described.

In a wireless communication system, it may be necessary to increase or decrease Tx power of a UE (e.g., User Equipment (UE)) and/or a mobile device if necessary. In this way, control of the Tx power of the UE and/or the mobile device may be referred to as uplink power control. For example, the Tx power control method may be applied to satisfy a requirement (e.g., SNR (Signal-to-Noise Ratio), BER (Bit Error Ratio), or BLER (Block Error Ratio)) in the BS (e.g., gNB, eNB, etc.) etc.).

The above described power control may be performed in an open-loop power control scheme and a closed-loop power control scheme.

In detail, the open-loop power control scheme refers to a method of controlling Tx power without feedback from a transmitting device (e.g., BS) to a receiving device (e.g., UE) and/or feedback from the receiving device to the transmitting device. For example, the UE may receive a specific channel/signal (pilot channel/signal) from the BS, and may estimate the strength of received power using the received channel/signal. Then, the UE may control the Tx power using the estimated strength of the received power.

In contrast, the closed-loop power control scheme refers to a method of controlling Tx power based on feedback from the transmitting device to the receiving device and/or feedback from the receiving device to the transmitting device. For example, the BS may receive a specific channel/signal from the UE, and may determine an optimum power level of the UE based on the power level, SNR, BER, BLER, etc. measured through the received specific channel/signal. The BS may transfer information (i.e., feedback) on the determined optimum power level to the UE through a control channel or the like, and the corresponding UE may control Tx power using the feedback provided by the BS.

Hereinafter, a power control method for cases in which a UE and/or a mobile device performs uplink transmission on a BS in a wireless communication system will be described.

In detail, hereinafter, power control methods for transmission of 1) a UL data channel (e.g., PUSCH (Physical Uplink Shared Channel)), 2) an uplink control channel (e.g., PUCCH (Physical Uplink Control Channel)), 3) a Sounding Reference Signal (SRS), and 4) a random access channel (e.g., PRACH (Physical Random Access Channel)) will be described. In this case, a transmission occasion (i.e., a transmission time unit) (i) for a PUSCH, a PUCCH, an SRS, and/or a PRACH may be defined by a slot index (n_s), a first symbol (S) in a slot, the number of consecutive symbols (L), and the like in a frame of a system frame number (SFN).

Hereinafter, for convenience of description, a power control method will be described based on a case in which the UE performs PUSCH transmission. Needless to say, the corresponding method may be extensively applied to other UL data channels supported in a wireless communication system.

In the case of PUSCH transmission in an activated (active) UL bandwidth part (UL BWP) of a carrier (carrier) (f) of a serving cell (c), the UE may calculate a linear power value of Tx power determined using Equation 2 below. Then, the UE may control the Tx power in consideration of the number of antenna ports and/or the number of SRS ports.

In detail, when performing PUSCH transmission in an activated UL BWP (b) of a carrier (f) of a serving cell (c) using a parameter set configuration based on an index j and a PUSCH power control adjustment state based on an index l, the UE may determine PUSCH Tx power $P_{\text{PUSCH},b,f,c}(i, j, q_d, l)$ (dBm) in the PUSCH transmission occasion (i) based on Equation 1 below.

[Equation 1]

$$P_{\text{PUSCH}b,f,c}(i,j,q_d,l) = \min\left\{\begin{array}{l} P_{\text{CMAX}f,c}(i), \\ P_{\text{O\_PUSCH}b,f,c}(j) + 10\log_{10}(2^{\mu} \cdot M_{\text{RB}b,f,c}^{\text{PUSCH}}(i)) + \alpha_{b,f,c}(j) \cdot PL_{b,f,c}(q_d) + \Delta_{\text{TF}b,f,c}(i) + f_{b,f,c}(i,l) \end{array}\right\}$$

[dBm]

In Equation 1, index j may refer to an index for an open-loop power control parameter (e.g., Po or alpha) and may be configured with the maximum of 32 parameter sets per cell. index q_d may refer to an index of a DL RS resource for PathLoss (PL) measurement and may be configured with the maximum of 4 measurements per cell. index l may refer to an index for a closed-loop power control process and may be configured with the maximum of 2 processes per cell.

In detail, Po may be a parameter broadcast as a part of system information, and may indicate a target reception power at a receiving side. The corresponding Po value may be configured in consideration of UE throughput, cell capacity, noise, and/or interference. In addition, alpha may indicate a rate at which compensation for path loss is performed. Alpha may be set to a value from 0 to 1, and full pathloss compensation or fractional pathloss compensation may be performed according to the set value. In this case, the alpha value may be set in consideration of interference between UEs and/or data rates. In addition, $P_{\text{CMAX}, f,c}(i)$ may represent the configured UE Tx power. For example, the configured UE Tx power may be interpreted as 'configured maximum UE output power' defined in 3GPP TS 38.101-1 and/or TS38.101-2. In addition, $M_{\text{RB}b,f,c}^{\text{PUSCH}}(i)$ may represent a bandwidth of PUSCH resource allocation expressed by the number of resource blocks (RBs) for a PUSCH transmission occasion based on subcarrier spacing. In addition, $f_{b,f,c}(i,l)$ related to the PUSCH power control adjustment state may be configured or indicated based on a TPC command field of DCI (e.g., DCI format 0_0, DCI format 0_1, DCI format 2_2, or DCI format 2_3).

In this case, a specific RRC (Radio Resource Control) parameter (e.g., SRI-PUSCHPowerControl-Mapping) may represent a linkage between an SRI (SRS Resource Indicator) field of DCI (downlink control information) and the above-mentioned indexes j, q_d, and l. In other words, the above-described indexes j, l, and q_d may be related to a beam, a panel, and/or a spatial domain transmission filter based on specific information. Through this, PUSCH Tx power control in units of beams, panels, and/or spatial domain transmission filters may be performed.

Parameters and/or information for the above-described PUSCH power control may be individually (i.e., independently) configured for each BWP. In this case, the corresponding parameters and/or information may be configured or indicated through higher layer signaling (e.g., RRC signaling or Medium Access Control-Control Element (MAC-CE)) and/or DCI. For example, parameters and/or information for PUSCH power control may be transferred through RRC signaling PUSCH-ConfigCommon, PUSCH-PowerControl, and the like.

## IAB (Integrated Access / Backhaul)

An example of a network with such integrated access and backhaul links is shown in Figure 7, where an IAB node or relay node (rTRP) can multiplex access and backhaul links in time, frequency, or space (e.g., beam-based operations).

The operations of different links may be at the same or different frequencies (also referred to as 'in-band' and 'out-band' relays). Efficient support of an out-band relay is important in some NR deployment scenarios, but it is very important to understand in-band operational requirements, which mean close interaction with an access link operating at the same frequency, to accept duplex constraints and avoid/mitigate interference.

In addition, operating an NR system in the mmWave spectrum may present several unique challenges, including experiencing severe short-term blocking that may not be easily mitigated by current RRC-based handover mechanisms due to the larger time scale required to complete a procedure in comparison to short-term blocking.

To overcome short-term blocking in mmWave systems, it may require a fast RAN-based mechanism (which does not necessarily require intervention of a core network) for inter-rTRP switching.

The need to mitigate short-term blocking of an NR operation in mmWave spectrum with the need for easier deployment of a self-backhauled NR cell may lead to the need for the development of an integrated framework that enables fast switching of access and backhaul links.

In addition, Over-The-Air (OTA) coordination between rTRPs may be considered as mitigating interference and supporting end-to-end route selection and optimization.

The following requirements and aspects may need to be resolved by an integrated access and wireless backhaul (IAB) for NR.

- Efficient and flexible operation for in-band and out-band broadcasting in indoor and outdoor scenarios
- Multi-hop and redundant connections
- End-to-end route selection and optimization
- Backhaul link support with high spectrum efficiency
- Legacy NR UE support

Legacy NR (new RAT) is designed to support half-duplex devices. In addition, half duplex of an IAB scenario is supported and worthy of being targeted. Furthermore, a full duplex IAB device may be studied.

In the IAB scenario, if each IAB node or Relay Node (RN) does not have scheduling capability, a Donor gNB (DgNB) must schedule the entire links among DgNB-related RNs and UEs. In other words, the DgNB may collect traffic information from all related RNs, make scheduling decisions for all links, and then inform each RN of schedule information.

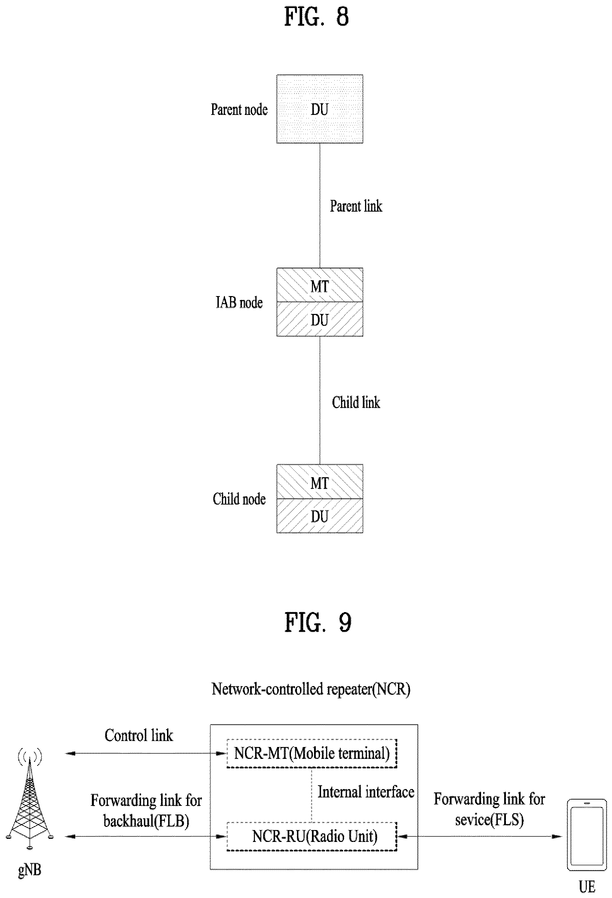

FIG. 8 schematically illustrates an example of a parent link and a child link.

As shown in FIG. 8, a link between an IAB node and a parent node is called a parent link, and a link between an IAB node and a child node/UE is called a child link. That is, a link between MT and parent DU is called a parent link, and a link between DU and child MT/UE is called a child link.

Yet, depending on interpretation or perspective, a link between an IAB node and a parent node may be called a backhaul link, and a link between an IAB node and a child node/UE may be called an access link.

An IAB node may receive a slot format configuration for communication with a parent node and a slot format configuration for communication with a child node/access UE.

In the existing IAB node, a TDM operation in which a DU and an MT operate through different time resources has been performed. On the other hand, resource multiplexing such as SDM/FDM, FC, etc. between the DU and the MT is required for efficient resource operation. As shown in FIG. 8, a link between the IAB node (IAB MT) and the parent node is referred to as a parent link, and a link between the IAB node (IAB DU) and the child node (child MT) is referred to as a child link. At this time, the TDM operation between the parent link and the child link has been discussed, and the SDM/FDM and FD operations are being discussed.

The DU and the MT existing in the same IAB node (or co-located) cannot operate simultaneously due to intra-node interference, slot/symbol boundary misalignment, power sharing, etc., and can operate in TDM. On the other hand, multiplexing of SDM/FDM may be used between the DU and the MT. Such multiplexing is applicable to an example case in which, since DU and MT use different panels, there is little interference between the panels. In this case, DU and MT existing (or co-located) in the same IAB node can transmit or receive data or information simultaneously, but it is impossible for each of the DU and the MT to perform transmission and reception simultaneously or to perform reception and transmission simultaneously.

Alternatively, FD may be used between the DU and the MT. This is applicable in cases where there is little interference between the DU and the MT, such as when a frequency domain where the DU operates and a frequency domain where the MT operates are far apart. In this case, the DU and the MT existing in the same IAB node (or co-located) can freely transmit and receive data simultaneously. The DU and the MT can transmit or receive data simultaneously, and it is also possible for each of the DU and the MT to perform transmission and reception simultaneously or to perform reception and transmission simultaneously.

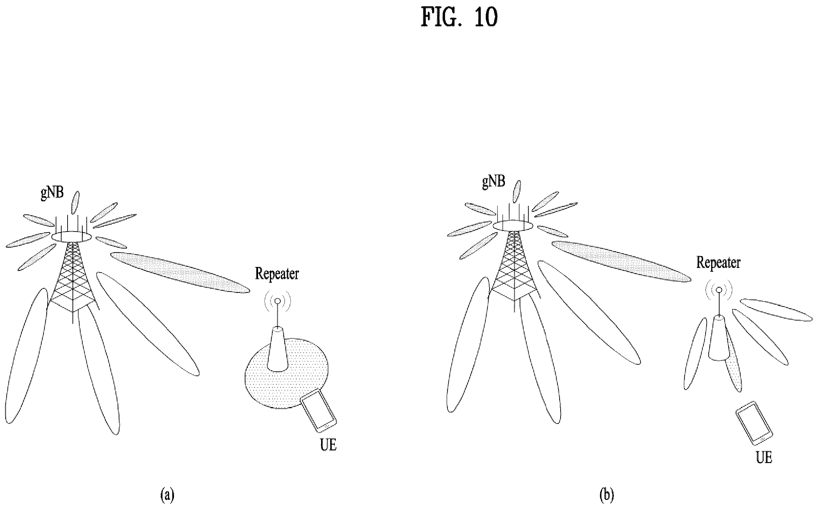

N MT-CCs and M DU-cells may exist in the IAB node. FIG. 10 shows an example where the IAB node is composed of three MT-CCs (where N=3) and three DU-cells (where M=3). MT-CCs existing in the IAB node may operate through the same or different frequency resources, and one MT-CC may be connected to one or more parent DU-cells. DU-cells existing in the IAB node may operate through the same or different frequency resources.

For a specific MT-CC/DU-cell pair within the IAB node, the MT-CC and the DU-cell may be in either TDM relationship or no-TDM relationship for the following four Tx/Rx direction combinations, and TDM or no-TDM may vary for each Tx/Rx combination.

- DU-Tx / MT-Tx
- DU-Rx / MT-Rx
- DU-Tx / MT-Rx
- DU-Rx / MT-Tx

For example, for a specific MT-CC/DU-cell pair, all of the four Tx/Rx combinations can operate with TDM. In this case, the corresponding DU-cell and the corresponding MT-CC should always operate with TDM regardless of Tx/Rx directions of the DU-cell and the MT-CC. In another example, for a specific MT-CC/DU-cell pair, all of the four Tx/Rx combinations can operate with no-TDM. In this case, the corresponding DU-cell and MT-CC can always operate simultaneously with no-TDM regardless of the Tx/Rx directions of the DU-cell and MT-CC. In another example, for a specific MT-CC/DU-cell pair, DU-Tx/MT-Tx and DU-Rx/MT-Rx can operate with no-TDM, and DU-Tx/MT-Rx and DU-Rx/MT-Tx can operate with TDM. The above-described operation relates to a method (e.g., SDM/FDM) for allowing simultaneous operation when the Tx/Rx directions of the DU-cell and the MT-CC are the same, and this method can operate simultaneously when the Tx/Rx directions of the DU-cell and the MT-CC are the same. TDM/no-TDM information for each Tx/Rx combination can be configured/determined differently or independently for each specific MT-CC/DU-cell pair within the IAB node.

At this time, the IAB MT may be connected to two parent DUs using, for example, a dual-connectivity method or a DAPS-HO method.

## Network-controlled repeater (NCR) in NR

Coverage is a fundamental aspect of cellular network deployments. Mobile operators rely on different types of network nodes to offer blanket coverage in their deployments. Deployment of regular full-stack cells is one option but it may not be always possible (e.g., no availability of backhaul) or economically viable. As a result, new types of network nodes have been considered to increase mobile operators' flexibility for their network deployments. For example, Integrated Access and Backhaul (IAB) was introduced in Rel-16 and enhanced in Rel-17 as a new type of network node not requiring a wired backhaul. Another type of network node is the RF repeater which simply amplify-and-forward any signal that they receive. RF repeaters have seen a wide range of deployments in 2G, 3G and 4G to supplement the coverage provided by regular full-stack cells. In Rel-17, RAN4 specified RF and EMC requirements for such RF repeaters for NR targeting both FR1 and FR2. While an RF repeater presents a cost effective means of extending network coverage, it has its limitations. An RF repeater simply does an amplify-and-forward operation without being able to take into account various factors that could improve performance. Such factors may include information on semi-static and/or dynamic downlink/uplink configuration, adaptive transmitter/receiver spatial beamforming, ON-OFF status, etc.

A network-controlled repeater is an enhancement over conventional RF repeaters with the capability to receive and process side control information from the network. Side control information could allow a network-controlled repeater to perform its amplify-and-forward operation in a more efficient manner. Potential benefits could include mitigation of unnecessary noise amplification, transmissions and receptions with better spatial directivity, and simplified network integration.

FIG. 9 is a diagram illustrating an example of topology in which a network-controlled repeater (NCR) performs transmission and reception between the gNB and the UE.

Referring to FIG. 9, the NCR may include a radio unit (RU) and a mobile terminal (MT).

The gNB may include a central unit (CU) and/or a distributed unit (DU), and the NCR may be connected to the gNB. In the NCR, the MT may form a control link with the gNB, and the RU may form a forwarding link for backhaul with the gNB and a forwarding link for access with the UE.

The RU of the NCR may be composed of only an RF layer. The RU may receive a signal transmitted by the gNB through the forwarding link at the RF end and may forward the received signal to the UE. As a result, the signal received from the UE may be received by the RF end, and the received signal may be forwarded to the gNB. The RU may only transmit signals between the gNB and the UE, and may not generate signals/channels by itself and transmit the generated signals/channels to the gNB/UE. Alternatively, the RU receives signals/channels from the gNB/UE, but does not detect the received signals/channels. In order to forward the received signal, the RU may control the directions of the Tx/Rx beams, the DL/UL directions, ON/OFF information, transmission (Tx) power, etc. in the RF end. However, this RU operation cannot be determined by the NCR itself, and can be entirely controlled by the gNB.

The MT of the above NCR may include an RF layer and L1, L2, and/or L3 layers. For example, the MT may include only an RF layer and an L1 layer or may include the L1 and L2 layers. Alternatively, the MT may include an RF layer and L1/L2/L3 layers. The MT may detect/receive a signal/channel transmitted by the gNB and may generate a signal/channel to be transmitted to the gNB. In addition, the MT may receive information (e.g., side control information) necessary to control the operation of the RU from the gNB. Meanwhile, the MT may not perform transmission and reception with the UE.

FIG. 10 is a diagram illustrating the radio frequency (RF) repeater and the NCR.

Referring to FIG. 10(a), the existing RF repeater may perform beamforming to which an omni-direction or fixed direction is applied. In contrast, referring to FIG. 10(b), the NCR can adaptively adjust the transmission/reception beam directions of the NCR according to the UE position and the channel condition of the UE, thereby obtaining a beamforming gain.

In addition, in the case of the existing RF repeater, since the DL/UL directions are not distinguished from each other in the TDD system, transmission and reception in the DL and UL directions are always performed simultaneously. Alternatively, only the fixed TDD configuration is applied to the existing RF repeater, so that switching between the DL direction and UL direction has been performed using a fixed time pattern. In contrast, the NCR may perform DL/UL switching in consideration of a TDD configuration. Through this, switching is being considered. As a result, the NCR can enable adaptive DL/UL operation, may minimize power consumption caused by forwarding unnecessary signals, and may also minimize interference.

In addition, in the case of the existing RF repeater, the power of a signal that is received regardless of whether the gNB and the UE transmit signals is always amplified and transmitted. As a result, unnecessary power consumption and interference to the surroundings are unavoidably increased. In contrast, the NCR performs ON/OFF operations, and when there is no signal to be transmitted to the gNB and UE, the operation of the RU is turned off, so that unnecessary signals are not transmitted.

In addition, in the case of existing RF repeaters, power of a signal received at a fixed ratio is amplified and transmitted. When a signal is transmitted with unnecessarily large power, interference affecting the surroundings may decrease by reducing transmission (Tx) power of the NCR. When a signal is transmitted with low power, transmission (Tx) power of the NCR is increased so that the signal can be stably transmitted to the receiver.

In addition, the existing RF repeater has been operated without recognizing a DL/UL slot boundary. On the other hand, in order for the NCR to adaptively adjust beamforming, ON/OFF, DL/UL directions, transmission power, etc. as described above, the NCR must know transmission/reception (Tx/Rx) boundaries of a downlink (DL). As a result, the RU operation can be applied differently for each unit time (e.g., slot/symbol).

**Side control information for NCR**

Hereinafter, the operation in the NCR will be assumed for convenience of description. However, the content described below can be applied to devices other than the NCR. In particular, the content described below can be applied for the operation of RIS. To this end, the NCR mentioned in the present disclosure can be replaced with 'RIS' and expanded/interpreted. In this case, the RU may serve to forward signals from the gNB to the UE in RIS and to forward signals from the UE to the gNB in RIS, and the MT may serve to receive side control information required for controlling signal transmission of the RU from the gNB. Meanwhile, the term "network" may hereinafter be interpreted as "gNB" or "CU/DU". In addition, the term "gNB" may hereinafter be interpreted as "network", "CU", or "DU".

In order for the NCR to forward the signal received by the RU, it may be considered that the directions of transmission/reception (Tx/Rx) beams, DL/UL directions, ON/OFF states, transmission (Tx) power, etc. are adjusted at the RF end. However, the RU operation cannot be determined by the NCR itself, and may be entirely controlled by the gNB. To this end, the MT may receive information (i.e., side control information) necessary to control the RU operation from the gNB. This side control information may be transmitted through L1/L2 signaling such as MAC-CE and DCI.

The above-described side control information may include all or part of the following information.

- Beamforming information: Information on the transmission/reception (Tx/Rx) beam direction of the RU

Here, beamforming information may include a beam direction for UL transmission to the gNB, a beam direction for DL reception from the gNB, a beam direction for DL transmission to the UE, and/or a beam direction for UL reception from the UE.

- Timing information to align transmission/reception boundaries of network-controlled repeater (NCR): Information for the RU to align transmission/reception (Tx/Rx) slots symbol boundaries
- Information on UL-DL TDD configuration: information on DL/UL directions of the RU
- ON-OFF information for efficient interference management and improved energy efficiency: Information on ON-OFF operations of the RU
- Power control information for efficient interference management: Information on transmission (Tx) power of the RU, and such information may include UL transmission (Tx) power to the gNB and/or DL transmission (Tx) power to the UE.

In this regard, the following scenarios may be considered.

- NCR-mobile termination (NCR-MT) may be defined as a functional entity that enables exchange of control information (e.g., side control information) by communicating with the gNB through a control link (C-link). The C-link is based on an NR Uu interface. For reference, the side control information is for at least control of an NCR-forwarding.
- NCR-forwarding (NCR-Fwd) is defined as a functional entity that amplifies and forwards a UL/DL RF signal between the gNB and the UE through a backhaul link and an access link. The operation of the NCR-Fwd may be controlled based on the side control information received from the gNB.

Hereinbelow, a power control method of the NCR-MT that transmits and receives control information in the operation of the NCR in an NR environment and the NCR-Fwd that serves as a relay between the UE and the gNB will be described.

**UL Tx power control of NCR-Fwd**

Since the NCR-MT is expected to transmit a UL signal to the gNB (or BS) similarly to a legacy UE, it is likely to perform UL signal transmission based on an existing UL Tx power control method. However, unlike the NCR-MT, in UL Tx power (UL signal Tx power) control of the NCR-Fwd, the NCR-Fwd amplifies and forwards UL signals received from multiple UEs without additional configuration for a transmission occasion. Therefore, the UL Tx power of the NCR-Fwd is naturally indicated as an amplifying gain. Consequently, although the NCR-Fwd has difficulty following the existing UL Tx power control method, since the NCR-Fwd is physically located at the same position as the NCR-MT, the UL Tx power (or UL amplifying gain or power amplifying gain) of the NCR-Fwd is expected to be similar to UL Tx power of the NCR-MT.

In this context, a method of indicating the UL Tx power or UL amplifying gain of the NCR-Fwd will be described in detail below.

The UL Tx power of the NCR-Fwd may be indicated by the amount of Tx power (e.g., dBm) or by the amplifying gain when the NCR-Fwd receives a UL signal from the UE and forwards the UL signal to the gNB. Hereinbelow, the method of indicating the UL Tx power by the amplifying gain will be described, but this method is a simple calculation method and may be applied to or replaced with the method of indicating the UL Tx power by the amount of Tx power.

Here, the indication of the UL amplifying gain of the NCR-Fwd may follow the UL Tx power of the NCR-MT (Scenario 1) or may be indicated separately from the UL Tx power of the NCR-MT (Scenario 2). Hereinafter, Scenario 1 and Scenario 2 will be described.

**1. Scenario 1**

Indicating the UL amplifying gain of the NCR-Fwd each time may result in loss in terms of signaling overhead. Therefore, the UL amplifying gain of the NCR-Fwd may be configured in correspondence with the UL Tx power of the NCR-MT. This method has the advantage of gaining benefits in terms of signaling overhead and eliminating the need for additional signaling because the gNB is capable of being aware of the amplifying gain of the NCR-Fwd through a power headroom (PHR) report of the NCR-MT. This method may be reasonable since the NCR-MT and NCR-Fwd are physically located at the same position. However, since the MCR-MT may differently determine the Tx power depending on a signal and/or a channel and the Tx power may change over time according to a channel condition or indication, directly applying the Tx power of the NCR-MT to the NCR-Fwd may not be suitable. Furthermore, while the amplifying gain of the NCR-Fwd is a relative value (e.g., dB), the UL Tx power of the NCR-MT is indicated as an absolute value (dBm). Therefore, as in the following methods, the UL amplifying gain of the NCR-Fwd may be configured in conjunction with the UL Tx power of the NCR-MT (e.g., a method of configuring the UL amplifying gain of the NCR-Fwd in association with some Tx power parameters of the UL Tx power of the NCR-MT).

(1) Alt. 1-1

The NCR may configure the UL amplifying gain of the NCR-Fwd based on output power (dBm) or configured output power (dBm) of UL configured for the NCR-MT. Here, the difference between the output power and the configured output power of the NCR-MT is as follows.

The configured output power is a UL Tx power value derived from scheduling and calculation for a specific transmission occasion of the NCR-MT and may be greater than a maximum output power. On the other hand, the output power is a smaller value between the maximum output power and the configured output power, representing an actual UL Tx power applied to actual UL signal transmission at an actual specific transmission occasion of the NCR-MT. The amplifying gain of the NCR-Fwd may be configured in correspondence with the configured output power of the NCR-MT. In this case, since the PHR report is calculated based on the configured output power, the gNB may be accurately aware of the UL amplifying gain of the NCR-Fwd through the PHR report of the NCR-MT. Alternatively, if the amplifying gain of the NCR-Fwd is configured in correspondence with the output power of the NCR-MT, since the size of the output power may be limited by the maximum output power, the UL amplifying gain or output power of the NCR-Fwd may naturally be limited by regulations and the like.

The UL amplifying gain of the NCR-Fwd may be calculated from the output power of the NCR-MT through prior agreement and/or arrangement or from the configured output power of the NCR-MT.

For example, the gNB may promise a mapping relationship between the configured output power of the NCR-MT and the UL amplifying gain of the NCR-Fwd through prior arrangement or configure the mapping relationship as operations and management (OAM). Alternatively, the gNB may consider indicating the mapping relationship between the configured output power of the NCR-MT and the UL amplifying gain of the NCR-Fwd through RRC/MAC-CE/DCI. For example, if the configured output power of the NCR-MT is X and the UL amplifying gain of the NCR-Fwd is Y, the gNB may (pre-)configure a table that maps intervals of X to Y values for the NCR-MT. For example, if $p \leq X < q$, the gNB may consider configuring, for the NCR-MT, p, q, and r for Y = r. Alternatively, through prior agreement or arrangement, an equation that derives the UL amplifying gain of the NCR-Fwd from the configured output power of the NCR-MT may be determined, and the gNB may indicate a parameter related to this equation to the NCR-MT through the RRC/MAC-CE/DCI. For instance, if the configured output power of the NCR-MT is X, and Y, which is the UL amplifying gain of the NCR-Fwd, is calculated in the form of Y= f(X) (where f(X) = aX + b), the gNB may indicate a and/or b to the NCR-MT.

Alternatively, the gNB may agree a mapping relationship between the output power of the NCR-MT and the amplifying gain of the NCR-Fwd through prior arrangement or configure the mapping relationship as OAM. Alternatively, the gNB may consider indicating the mapping relationship between the output power of the NCR-MT and the amplifying gain of the NCR-Fwd through the RRC/MAC-CE/DCI. For example, if the output power of the NCR-MT is X and the UL amplifying gain of the NCR-Fwd is Y, the gNB may consider configuring a table that maps intervals of X to Y values for the NCR-MT. For example, if $p \leq X < q$ and Y = r, the gNB may consider configuring p, q, and r for the NCR-MT. Alternatively, through prior agreement or arrangement, an equation that derives the UL amplifying gain of the NCR-Fwd from the output power of the NCR-MT may be determined, and the gNB may consider indicating a parameter related to the equation to the NCR-MT through the RRC/MAC-CE/DCI. For example, if the output power of the NCR-MT is X, and Y, which is the UL amplifying gain of the NCR-Fwd, is calculated in the form of Y= f(X) (where f(X) = aX + b), the gNB may indicate a and/or b to the NCR-MT.

(2) Alt. 1-2

The NCR may configure the UL amplifying gain of the NCR-Fwd in correspondence with the output power (dBm) or configured output power (dBm) of a specific signal/channel of the NCR-MT.

Similar to Alt. 1-1, the UL amplifying gain of the NCR-Fwd may be derived from the configured output power or the output power of the NCR-MT. However, unlike Alt. 1-1, the UL amplifying gain of the NCR-Fwd may be calculated from the output power or the configured output power of the specific signal/channel of the NCR-MT. For example, the gNB may expect that the UL amplifying gain of NCR-Fwd will be configured based on a specific equation or mapping relationship from the output power or the configured output power of one signal from among a PRACH, a PUCCH, a PUSCH, and an SRS of the NCR-MT. For example, based on a specific equation or mapping relationship corresponding to Alt. 1-1 described above, the UL amplifying gain of the NCR-Fwd associated with the output power or the configured output power of one signal from among the PRACH, the PUCCH, the PUSCH, and the SRS of the NCR-MT may be indicated to or configured for the NCR-MT.

(3) Alt. 1-3

The NCR may configure the UL amplifying gain of the NCR-Fwd using only some (or at least one) of indexes used for power control of the NCR-MT.

UL Tx power consists of open loop power control (OLPC) and closed loop power control (CLPC). OLPC may be configured by a power configured by indication and a power for calculating path loss from a specific RS and compensating for the path loss. CLPC serves to configure an offset value compared to a previous transmission power and is configured by a transmit power control (TPC) command. In this context, the UL Tx power may be indicated using various indexes. In this case, the NCT-MT may indicate or configure the UL amplifying gain of the NCR-Fwd based on at least one (or only one) of indexes used to indicate the UL Tx power. For example, UL Tx power of the PUSCH at transmission occasion i (Equation 2), UL Tx power of the PUCCH (Equation 3), UL Tx power of the SRS (Equation 4), and UL Tx power of the PRACH (Equation 5) may be determined by the following equations (TS 38.213 7.1.1, 7.2.1, 7.3.1, and 7.4).

$$[\text{Equation 2}]$$

$$P_{\text{PUSCH},b,f,c}(i,j,q_d,l) = \min \begin{cases} P_{\text{CMAX},f,c}(i), \\ P_{\text{O\_PUSCH},b,f,c}(j) + 10\log_{10}(2^{\mu} \cdot M_{\text{RB}b,f,c}^{\text{PUSCH}}(i)) + \alpha_{b,f,c}(j) \cdot PL_{b,f,c}(q_d) + \Delta_{\text{TF}b,f,c}(i) + f_{b,f,c}(i,l) \end{cases} [\text{dBm}]$$

$$[\text{Equation 3}]$$

$$P_{\text{PUCCH},b,f,c}(i,q_u,q_d,l) = \min \begin{cases} P_{\text{CMAX},f,c}(i), \\ P_{\text{O\_PUCCH},b,f,c}(q_u) + 10\log_{10}(2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{cases} [\text{dBm}]$$

$$[\text{Equation 4}]$$

$$P_{\text{SRS},b,f,c}(i,q_s,l) = \min \begin{cases} P_{\text{CMAX},f,c}(i), \\ P_{\text{O\_SRS},b,f,c}(q_s) + 10\log_{10}(2^{\mu} \cdot M_{\text{SRS},b,f,c}(i)) + \alpha_{\text{SRS},b,f,c}(q_s) \cdot PL_{b,f,c}(q_d) + h_{b,f,c}(i,l) \end{cases} [\text{dBm}]$$

$$[\text{Equation 5}]$$

$$P_{\text{PRACH},b,f,c}(i) = \min \{ P_{\text{CMAX},f,c}(i), P_{\text{PRACH},\text{target},f,c} + PL_{b,f,c} \} [\text{dBm}]$$

For each equation, $P_{\text{O\_}\{PUSCH,PUCCH,SRS\}}$ refers to power configured by indication of the gNB in OLPC, $q_{\{d,u,s\}}$ refers to an index of a DL RS used to calculate and compensate for path loss in OLPC, and $l$ is an index of CLPC computation included in scheduling DCI of the PUSCH/PUCCH/SRS or indicated by a group common TPC command in DCI format 2_2. Therefore, in order to indicate the UL amplifying gain of the NCR-Fwd, some or one of these indexes for calculating the UL Tx power of the NCR-MT may be used to derive the UL amplifying gain of the NCR Fwd.

For example, similar to Alt. 1-2, the UL amplifying gain of the NCR-Fwd may be calculated from the configured UL Tx power of a specific signal/channel of the NCR-MT, but all parameters for the UL Tx power of the NCR-MT may not always be used. That is, the UL amplifying gain of the NCR-Fwd may be configured or determined based on a pre-configured index or a specific index (or component) among multiple indexes or components used to calculate the UL Tx power of a specific signal/channel of the NCR-MT. For example, if the UL amplifying gain of the NCR-Fwd is Y and a specific parameter value among PUSCH power control parameters of the NCR-MT is X, the UL amplifying gain of the NCR-Fwd may be derived in the form of Y=f(X). If f(X) = aX + bf(X), the NCR-MT may receive values of a and/or b indicated or configured by the gNB via the RRC/MAC-CE/DCI, etc.

Alternatively, the NCR-MT may receive a table configured to map intervals of X to values of Y from the gNB. For example, if p≤X<q and Y=r, the NCR-MT may receive p, q, and r configured or indicated by the gNB. Here, X may correspond to at least one of components or indexes used for $P_{O\_PUSCH_{b,f,c}}(j)$, $P_{O\_PUCCH_{b,f,c}}(q_u)$, $P_{O\_SRS_{b,f,c}}(q_s)$, $P_{PRACH,target,f,c}(q_s)$, $PL_{b,f,c}(q_d)$, $PL_{b,f,c}$, $f_{b,f,c}(i, l)$, $g_{b,f,c}(i,l)$, $h_{b,f,c}(i, l)$, and the like in the above equations (Equation 1 to Equation 5).

When the UL amplifying gain of the NCR-Fwd is configured in correspondence with the UL Tx power of the NCR-MT using at least one of Alt. 1-1, Alt. 1-2, or Alt. 1-3, there may be ambiguity regarding a timeline. Firstly, if the NCR-MT and NCR-Fwd operate based on UL TDM, ambiguity may arise because the NCR-Fwd performs transmission at a time when the NCR-MT does not perform transmission. Alternatively, even if the NCR-MT and NCR-Fwd do not operate based on UL TDM, the Tx power of the NCR-MT may be configured based on a Tx opportunity unit of the NCR-MT. However, a time unit for UL transmission regarding the NCR-Fwd may not exist or may be unknown. This is due to the structure of the NCR in which a UL signal received from the UE is amplified and then transmitted to the gNB according to characteristics of the repeater. Therefore, in order to eliminate such ambiguity, the UL amplifying gain of the NCR-Fwd may be configured in correspondence with or based on a predetermined specific timing point when the UL amplifying gain of the NCR-Fwd is derived from the UL Tx power (of a specific signal or channel) of the NCR-MT using methods of Alt. 1-1, Alt. 1-2, and/or Alt. 1-3.

Specifically, in all cases of Alt. 1-1, Alt. 1-2, and Alt. 1-3 (when the UL amplifying gain of NCR-Fwd is calculated from a parameter including a specific index of the configured output power, output power, or Tx power control of the NCR-MT), the UL amplifying gain of the NCR-Fwd may be configured/indicated based on a predetermined specific timing point. For example, the UL amplifying gain of the NCR-Fwd may be derived or configured based on the parameter including the specific index of the configured output power, output power, or Tx power control of the NCR-MT at the specific timing point. Here, the specific timing point may be configured or indicated based on a preset time resource (a specific subframe, a specific slot, or a specific symbol) or a preset periodicity and offset. For example, the specific timing point may be determined/indicated based on the periodicity and offset at which the NCR-MT receives the configured output power and/or output power of the NCR-MT from the gNB through the RRC/MAC-CE/DCI or may be determined/indicated based on a specific slot within a predetermined subframe through prior agreement or arrangement. Alternatively, the specific timing point may be derived from a time when update of the UL Tx power of the NCR-Fwd is indicated. The UL amplifying gain of the NCR-Fwd may be configured through methods of Alt. 1-1, Alt. 1-2, and/or Alt. 1-3 based on the UL Tx of the NCR-MT at the specific timing point determined/configured as described above.

Alternatively, the UL amplifying gain of the NCR-Fwd may be determined/configured based on the most recent UL Tx power of the NCR-MT based on the specific timing point. For example, the UL amplifying gain of the NCR-Fwd may be configured using methods of Alt. 1-1, Alt. 1-2, and/or Alt. 1-3 based on the most recent UL Tx power of the NCR-MT, the most recent UL Tx power of a specific signal/channel of the NCR-MT, or the most recent UL Tx power control parameter of the specific signal/channel of the NCR-MT, starting from the specific timing point. For instance, the specific timing point may be configured based on a preset periodicity and offset. In this case, the UL amplifying gain of the NCR-Fwd may be determined based on the most recent UL Tx power of the specific signal/channel of the NCR-MT or power control parameter for configuring the UL Tx power, based on a specific timing point specified according to the periodicity and offset.

Alternatively, it may be inappropriate for the Tx power of the NCR-Fwd to be continuously changed and configured according to the Tx (or Rx) power of the NCR-MT. Therefore, the UL Tx power of the NCR-Fwd may be updated based on at least one of Alt. 1-1, Alt. 1-2, or Alt. 1-3 only at an indication timing point of update of the Tx power, at a timing at which the indication is received, or after a preset time (e.g., only for a specific timing duration) from the indication reception timing. Alternatively, the UL Tx power of the NCR-Fwd may be updated according to the periodicity of the specific timing point.

## 2. Scenario 2

The configuration of the UL amplifying gain of the NCR-Fwd may be indicated separately from the UL Tx power of the NCR-MT. In this case, although the UL amplifying gain of the NCR-Fwd may be directly received by the NCR-MT from the gNB, the UL amplifying gain may also be determined based on at least one of the following rules separately from the UL Tx power of the NCR-MT.

(1) Alt. 2-1

The UL amplifying gain of the NCR-Fwd may be determined based on the path loss of a specific signal/channel received by the NCR-MT from the gNB.

Specifically, the UL amplifying gain of the NCR-Fwd may be configured or determined based on a DL RS such as an SSB/CSI-RS received by the NCR-MT. In this case, an index of an RS used as the basis for configuring the UL amplifying gain of the NCR-Fwd may be explicitly configured or indicated by the gNB. Alternatively, the index of the RS used as the basis may be implicitly determined or indicated. For example, there may be N SSBs received by the NCR (or NCT MT), and an SSB index set expected to be received by the NCR-MT and an SSB index set expected to be forwarded to the UE via the NCR-Fwd may be distinguished. In this case, the UL amplifying gain of the NCR-Fwd may be configured or determined as power for compensating for the UL amplifying gain based on a received reference signal received power (RSRP) of the SSB index set expected to be forwarded to the UE via the NCR-Fwd. Alternatively, the gNB may indicate, to the NCR-MT, an SSB index for deriving the UL amplifying gain of the NCR-Fwd through the RRC/MAC-CE/DCI.

Using the methods of Alt. 2-1 etc. (when the UL amplifying gain of the NCR-Fwd is configured separately from the UL Tx power of the NCR-MT), it may be difficult for the gNB to be accurately aware of the UL amplifying gain of the NCR-Fwd. Therefore, the NCR-MT may additionally report information about a margin of the UL amplifying gain of the NCR-Fwd (i.e., the difference between a maximum amplifying gain and a current amplifying gain) to the gNB through the MAC-CE/UCI. The contents of the reporting may further include information about the difference between maximum output power of the NCR-Fwd or the NCR configured due to implementation limitations or regulatory limitations and output power at a reporting timing. The aforementioned reporting may be performed at a periodicity configured by prior arrangement or agreement or at a periodicity indicated by the gNB through the RRC/MAC-CE/DCI or may be triggered by a specific event. The specific event may be a change in the UL amplifying gain, a margin of the output power relative to the maximum output power of the NCR or the NCR-Fwd being below a certain threshold, or an indication by the gNB to perform the reporting.

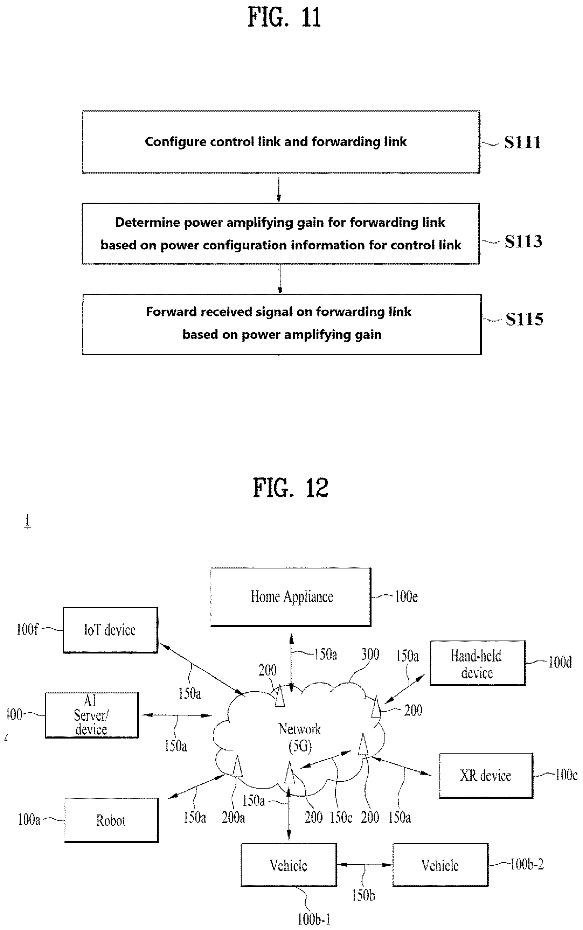

FIG. 11 is a flowchart illustrating a method for a device to determine a power amplifying gain for a forwarding link.

Referring to FIG. 11, the device may configure a control link for receiving control information from a BS and a forwarding link for forwarding a signal received from a UE (S111). Specifically, the device may correspond to an NCR including an NCR-MT that receives control information or transmits a UL signal via the control link formed with the BS or a gNB and an NCR-Fwd that forms the forwarding link for relaying or amplifying the signal (or UL signal) received from the UE and then forwarding the signal to the BS. The forwarding link may correspond to the aforementioned backhaul link.

Next, the device may determine a power amplifying gain (e.g., the aforementioned UL Tx amplifying gain) for forwarding a signal received through the forwarding link (S113). Specifically, as described above, the device may determine the power amplifying gain for the forwarding link based on side control information forwarded by the BS or based on power control information for determining the Tx power of the UL signal to be transmitted through the control link.

For example, the device may determine the power amplifying gain based on one of a plurality of power parameters included in the power control information. Here, the one power parameter may be preconfigured as a power parameter related to path loss among the plurality of power parameters. Alternatively, the device may determine the power amplifying gain based on a resource index of a DL reference signal included in the power control information. For example, the device may calculate the path loss based on signal strength (e.g., RSRP) measured based on an index of the DL reference signal and determine the power amplifying gain based on power for compensating for the path loss.

Alternatively, as described in Scenario 1, the device may determine the power amplifying gain as a value mapped to the one power parameter based on a predefined table related to the one power parameter. Alternatively, as described in Scenario 1, the device may determine a value calculated by applying a predefined specific equation, weight, offset, etc., to the one power parameter as the power amplifying gain.

Alternatively, the power control information related to the control link may include corresponding power configuration parameters for each UL type. For example, as in Equations 2 to 5, the Tx power of a UL signal for the control link may be calculated based on the power configuration parameters configured for each type of UL signal. Therefore, the device needs to be preconfigured to consider the power control information for a specific UL signal related to the control link upon determining the power amplifying gain for the forwarding link. For example, among a plurality of UL types for the control link, a specific type of UL signal to be considered in determining the power amplifying gain may be preconfigured for the device. As described in Scenario 1, the specific type of UL signal may be preconfigured as one type of UL signal from among a physical uplink shared channel (PUSCH), a physical uplink control channel (PUCCH), a sounding reference signal (SRS), and a physical random access channel (PRACH). For example, the specific type of UL signal may be preconfigured as the SRS or the PRACH, and the device may determine the power amplifying gain based on the power control parameter for the SRS or the PRACH from among the power control information. If the specific type of UL signal is the PRACH, the power amplifying gain may be determined based on the power control parameter related to the path loss of the PRACH. In this case, the power amplifying gain may be adjusted based on whether a power ramping counter related to the PRACH is ramped up. For instance, if the power ramping counter related to the PRACH increases, the power amplifying gain may be increased by a preset value in correspondence with the increase in the power ramping counter.

Alternatively, the device may determine the power amplifying gain based on a first Tx power, which is an UL Tx power for the control link, calculated (most recently regardless of the type of UL signal) based on the power control information. For example, as described in Scenario 1, the device may determine the power amplifying gain as a value mapped to the first Tx power based on a predefined table for each Tx power interval calculated for the UL signal. Alternatively, the device may determine a value obtained by applying a predefined specific equation, weight, or offset to the calculated first Tx power as the power amplifying gain, as described in Scenario 1. The predefined specific equation, weight, and offset can be previously indicated, defined, or configured by the BS through radio resource control (RRC) signaling or downlink control information (DCI).

Next, the device may forward the received signal to the BS through the forwarding link based on the power amplifying gain (S115). For example, the device may amplify the signal received from the UE (on the access link) by the determined power amplifying gain and then forward the signal through the forwarding link.

Alternatively, the device may additionally report information about the relationship between the determined power amplifying gain and a maximum power amplifying gain to the BS. For example, the device may report information about the difference between the maximum power amplifying gain and the power amplifying gain to the BS. Alternatively, the contents of the reporting may further include information about the difference between maximum output power of the NCR-Fwd or the NCR configured due to implementation limitations or regulatory limitations and output power at a reporting time. The reporting may be performed at a periodicity configured by prior arrangement or agreement or at a periodicity indicated by the gNB through the RRC/MAC-CE/DCI or may be triggered by a specific event. The specific event may be a change in the UL amplifying gain, a margin of the output power relative to the maximum output power of the NCR or the NCR-Fwd being below a certain threshold, or an indication by the gNB to perform the reporting. In this case, the BS may accurately discern the power amplifying gain for the forwarding link through the reporting.

Through this method, the MCR may determine the amplifying gain for the NCR-Fwd in conjunction with the Tx power of the MT, thereby minimizing the signaling load of the side control information. Alternatively, even if the NCR receives separate indication or configuration for the amplifying gain of the NCR-Fwd from the BS, a separate reporting procedure capable of predicting the amplifying gain the BS may be defined so that the BS is capable of accurately predicting the information about the amplifying gain through this reporting.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

FIG. 12 illustrates a communication system applied to the present disclosure.

Referring to FIG. 12, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

**Examples of wireless devices to which the present disclosure is applied**

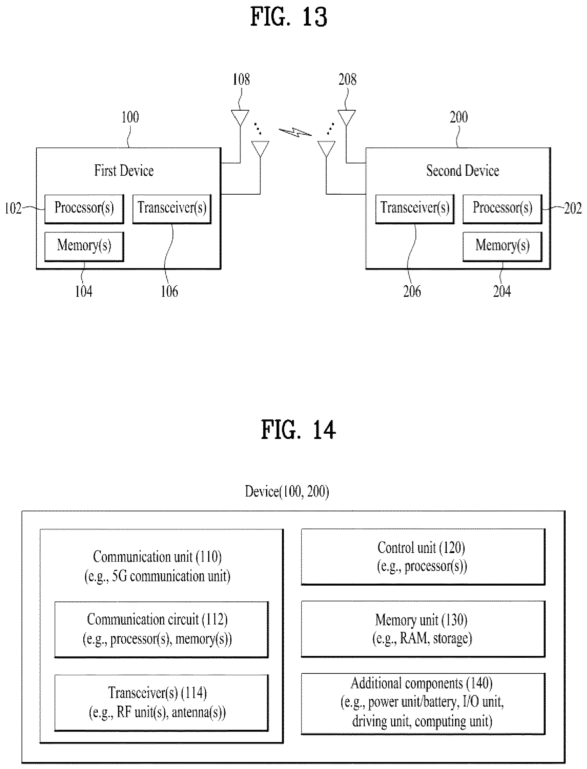

FIG. 13 illustrates a wireless device applicable to the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to one example, the first wireless device 100 or the NCR may include the processor(s) 102 connected to the RF transceiver(s) 106 and include the memory(s) 104. The memory(s) 104 may include at least one program capable of performing operations related to the embodiments described with reference to FIGS. 9 to 11.

Specifically, the processor(s) 102 may control the RF transceiver(s) 106 to perform operations including configuring a control link for receiving control information from the BS and a forwarding link for forwarding a signal received from the UE, determining a power amplifying gain for the forwarding link, and forwarding the signal received from the UE to the BS through the forwarding link based on the power amplifying gain. The power amplifying gain may be determined based on power control information configured for the control link. Alternatively, the memory(s) 104 may include instructions for allowing the processor(s) 102 to perform operations including configuring a control link for receiving control information from a BS and a forwarding link for forwarding a signal received from the UE, determining a power amplifying gain for the forwarding link, and forwarding the signal received from the UE to the BS through the forwarding link based on the power amplifying gain.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of application of wireless devices to which the present disclosure is applied

FIG. 14 illustrates another example of a wireless device applied to the present disclosure.
Referring to FIG. 14, wireless devices 100 and 200 may correspond to the wireless devices 100 and 200 of FIG.

13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 14, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. In another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and

**EP 4 568 368 A1**

a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

**Industrial Applicability**

The embodiments of the present disclosure described above are applicable to various mobile communication systems.

**Claims**

1. A method of performing communication by a device in a wireless communication system, the method comprising:

configuring a control link for receiving control information from a base station (BS) and a forwarding link for forwarding a signal received from a user equipment (UE);
determining a power amplifying gain for the forwarding link; and
forwarding the signal received from the UE to the BS through the forwarding link based on the power amplifying gain,
wherein the power amplifying gain is determined based on power control information configured for the control link.

2. The method of claim 1, wherein the power amplifying gain is determined based on one of a plurality of power parameters included in the power control information.

3. The method of claim 2, wherein the one power parameter is preconfigured as a power parameter related to path loss among the plurality of power parameters.

4. The method of claim 1, wherein the power amplifying gain is determined based on a resource index of a downlink reference signal included in the power control information.

5. The method of claim 1, wherein the power amplifying gain is determined based on the power control information related to a sounding reference signal (SRS) for the control link.

6. The method of claim 2, wherein the power amplifying gain is determined based on the power control information related to a physical random access channel (PRACH) for the control link.

7. The method of claim 1, wherein the power amplifying gain is determined by applying at least one of a predetermined weight or an offset to a first transmission power of an uplink signal for the control link, calculated based on the power control information.

8. The method of claim 7, wherein the predetermined weight and the offset are indicated by the BS through radio resource control (RRC) signaling or downlink control information (DCI).

9. The method of claim 1, further comprising reporting information about the power amplifying gain compared to a maximum power amplifying gain to the BS.

10. The method of claim 1, wherein the device is a network-controlled repeater (NCR).

11. A computer-readable recording medium in which a program for executing the method of claim 1 is recorded.

12. A device for performing communication in a wireless communication system, the device comprising:

a memory configured to store instructions; and
a processor configured to perform operations by executing the instructions,
wherein the operations of the processor include configuring a control link for receiving control information from a base station (BS) and a forwarding link for forwarding a signal received from a user equipment (UE), determining a power amplifying gain for the forwarding link, and forwarding the signal received from the UE to the BS through the forwarding link based on the power amplifying gain, and
wherein the power amplifying gain is determined based on power control information configured for the control link.

13. The device of claim 12, wherein the power amplifying gain is determined based on one of a plurality of power parameters included in the power control information.

14. The device of claim 13, wherein the one power parameter is preconfigured as a power parameter related to path loss among the plurality of power parameters.

15. A chipset for performing communication in a wireless communication system, the chipset comprising:

at least one processor; and
at least one memory operatively connected to the at least one processor and configured to cause, when executed, the at least one processor to perform operations,
wherein the operations include configuring a control link for receiving control information from a base station (BS) and a forwarding link for forwarding a signal received from a user equipment (UE), determining a power amplifying gain for the forwarding link, and forwarding the signal received from the UE to the BS through the forwarding link based on the power amplifying gain, and
wherein the power amplifying gain is determined based on power control information configured for the control link.

# FIG. 1

# FIG. 2

# FIG. 3

|  | One Frame (10ms) |
|---|---|

|  | Half-Frame (5ms) | Half-Frame (5ms) |
|---|---|---|

|  | Subframe 0 (1ms) | ... | Subframe 4 (1ms) | Subframe 5 (1ms) | ... | Subframe 9 (1ms) | ... |
|---|---|---|---|---|---|---|---|

Subframe (1ms)

| 15KHz | Slot 0 (14symbols) |
|---|---|

1ms

| 30KHz | Slot 0 (14symbols) | Slot 1 |
|---|---|---|

500us

| 60KHz | Slot 0 (14symbols) | Slot 1 | Slot 2 | Slot 3 |
|---|---|---|---|---|

250us

| 120KHz | Slot 0 (14symbols) | Slot 1 | Slot 2 | Slot 3 | Slot 4 | Slot 5 | Slot 6 | Slot 7 |
|---|---|---|---|---|---|---|---|---|

125us

# FIG. 4

# FIG. 5

| Long PUSCH | | |
|---|---|---|

PDCCH | Gap | PDSCH/PUSCH | Short PUCCH

| | | Long PUCCH |
|---|---|---|

One slot

f

t

# FIG. 6

UE                                    BS

CORESET configuration                 S502

SS configuration                      S504

PDCCH generation                      S506

PDCCH candidate
monitoring in the          S508
configured SS

# FIG. 7

# FIG. 8

Parent node    DU

Parent link

IAB node    MT
            DU

Child link

Child node    MT
             DU

# FIG. 9

Network-controlled repeater(NCR)

Control link

NCR-MT(Mobile terminal)

Internal interface

Forwarding link for backhaul(FLB)

NCR-RU(Radio Unit)

Forwarding link for sevice(FLS)

gNB

UE

# FIG. 10

(a)

(b)

# FIG. 11

| | |
|---|---|
| Configure control link and forwarding link | ~ S111 |

↓

| | |
|---|---|
| Determine power amplifying gain for forwarding link based on power configuration information for control link | ~ S113 |

↓

| | |
|---|---|
| Forward received signal on forwarding link based on power amplifying gain | ~ S115 |

# FIG. 12

1

# FIG. 13

# FIG. 14

Device(100, 200)

| | |
|---|---|
| Communication unit (110) (e.g., 5G communication unit) | Control unit (120) (e.g., processor(s)) |
| Communication circuit (112) (e.g., processor(s), memory(s)) | Memory unit (130) (e.g., RAM, storage) |
| Transceiver(s) (114) (e.g., RF unit(s), antenna(s)) | Additional components (140) (e.g., power unit/battery, I/O unit, driving unit, computing unit) |

## INTERNATIONAL SEARCH REPORT

| International application No. |
|---|
| **PCT/KR2023/010893** |

### A. CLASSIFICATION OF SUBJECT MATTER

**H04W 52/52**(2009.01)i; **H04W 52/14**(2009.01)i; **H04W 52/24**(2009.01)i; **H04W 52/10**(2009.01)i; **H04W 52/36**(2009.01)i; **H04W 72/20**(2023.01)i; **H04W 84/06**(2009.01)i; **H04B 7/155**(2006.01)i

According to International Patent Classification (IPC) or to both national classification and IPC

### B. FIELDS SEARCHED

Minimum documentation searched (classification system followed by classification symbols)

H04W 52/52(2009.01); H04B 7/155(2006.01); H04B 7/185(2006.01); H04W 16/28(2009.01); H04W 40/08(2009.01); H04W 40/24(2009.01); H04W 56/00(2009.01); H04W 72/04(2009.01); H04W 72/12(2009.01); H04W 88/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기지국 (base station), 제어 (control), 포워딩 (forwarding), 전력 (power), 이득 (gain)

### C. DOCUMENTS CONSIDERED TO BE RELEVANT

| Category* | Citation of document, with indication, where appropriate, of the relevant passages | Relevant to claim No. |
|---|---|---|
| X | KR 10-2022-0057533 A (QUALCOMM INCORPORATED) 09 May 2022 (2022-05-09)<br>See paragraphs [0022]-[0088]. | 1-15 |
| A | US 2021-0329581 A1 (AR & NS INVESTMENT, LLC) 21 October 2021 (2021-10-21)<br>See paragraphs [0014]-[0065]. | 1-15 |
| A | US 2021-0185588 A1 (QUALCOMM INCORPORATED) 17 June 2021 (2021-06-17)<br>See claims 1-8. | 1-15 |
| A | US 2017-0280471 A1 (LG ELECTRONICS INC.) 28 September 2017 (2017-09-28)<br>See claims 1-14. | 1-15 |
| A | US 2022-0225119 A1 (TELEFONAKTIEBOLAGET LM ERICSSON (PUBL)) 14 July 2022 (2022-07-14)<br>See paragraphs [0056]-[0105]. | 1-15 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **02 November 2023** | **03 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/010893**

| Patent document cited in search report | | | Publication date (day/month/year) | Patent family member(s) | | | Publication date (day/month/year) |
|---|---|---|---|---|---|---|---|
| KR | 10-2022-0057533 | A | 09 May 2022 | BR | 112022003303 | A2 | 24 May 2022 |
| | | | | CN | 114303326 | A | 08 April 2022 |
| | | | | EP | 4026260 | A1 | 13 July 2022 |
| | | | | TW | 202118325 | A | 01 May 2021 |
| | | | | US | 11671168 | B2 | 06 June 2023 |
| | | | | US | 2021-0075497 | A1 | 11 March 2021 |
| | | | | US | 2021-0203406 | A1 | 01 July 2021 |
| | | | | US | 2023-0261733 | A1 | 17 August 2023 |
| | | | | WO | 2021-046140 | A1 | 11 March 2021 |
| US | 2021-0329581 | A1 | 21 October 2021 | US | 11412471 | B2 | 09 August 2022 |
| | | | | US | 11665657 | B2 | 30 May 2023 |
| | | | | US | 2022-0330189 | A1 | 13 October 2022 |
| | | | | US | 2023-0247575 | A1 | 03 August 2023 |
| US | 2021-0185588 | A1 | 17 June 2021 | CN | 114788215 | A | 22 July 2022 |
| | | | | EP | 4078881 | A1 | 26 October 2022 |
| | | | | US | 11758465 | B2 | 12 September 2023 |
| | | | | WO | 2021-126975 | A1 | 24 June 2021 |
| US | 2017-0280471 | A1 | 28 September 2017 | US | 10912100 | B2 | 02 February 2021 |
| | | | | WO | 2016-018069 | A1 | 04 February 2016 |
| US | 2022-0225119 | A1 | 14 July 2022 | EP | 3963747 | A1 | 09 March 2022 |
| | | | | WO | 2020-222203 | A1 | 05 November 2020 |

Form PCT/ISA/210 (patent family annex) (July 2022)